# EUROPÄISCHE PATENTANMELDUNG

(11) **EP 4 417 952 A1**
(43) Veröffentlichungstag der Anmeldung: **21.08.2024**
(21) Anmeldenummer: 24154685.2
(22) Anmeldetag: 30.01.2024
(51) Int. Cl.: G01L 13/00, G01L 15/00, G01M 3/26, G01N 7/00

(54) **MESSVERFAHREN ZUR MESSUNG EINER FEUCHTIGKEIT EINES EINEN SCHAUM AUFWEISENDEN HOHLRAUMS IN EINEM WENIGSTENS ZWEI ÖFFNUNGEN AUFWEISENDEN KAROSSERIEBAUTEIL EINES KRAFTFAHRZEUGS SOWIE MESSVORRICHTUNG ZUR DURCHFÜHRUNG EINES SOLCHEN VERFAHRENS**

(30) Priorität: 20.02.2023 DE 102023000576
(71) Anmelder: Mercedes-Benz Group AG, 70372 Stuttgart (DE)
(72) Erfinder: BIRK, Alexander, 70563 Stuttgart (DE); MÖNNIG, Andreas, 28816 Stuhr (DE); ALTIN, Alan, 71131 Jettingen (DE); PASCHELKE, Stefan, 71067 Sindelfingen (DE)
(74) Vertreter: Lederer, Elisabeth

(57) **Zusammenfassung**

Die Erfindung betrifft ein Messverfahren zur Messung einer Feuchtigkeit eines einen Schaum (3) aufweisenden Hohlraums (5) in einem wenigstens zwei Öffnungen (7) aufweisenden Bauteil (9), wobei in einer Prüf-Messabfolge
- wenigstens eine erste in den Hohlraum (5) des Bauteils (9) hineinreichende Öffnung (7.1) der wenigstens zwei Öffnungen (7) mit wenigstens einem Druckmesselement (13) druckleitend verbunden wird, wobei
- eine zweite in den Hohlraum (5) des Bauteils (9) hineinreichende Öffnung (7.2) der wenigstens zwei Öffnungen (7) mit einem Druckanschluss (17) einer Druckbeaufschlagungsvorrichtung (11) druckleitend verbunden wird, wobei
- die zweite Öffnung (7.2) mittels des Druckanschlusses (17) mit einem vorbestimmten Messdruck beaufschlagt wird, wobei
- zumindest ein Ist-Druckwert an der ersten Öffnung (7.1) mittels des wenigstens einen Druckmesselements (13) nach einer vorbestimmten Zeitdauer nach Messdruckbeaufschlagung erfasst wird, wobei
- der zumindest eine Ist-Druckwert mit einem Referenzdruck verglichen wird, wobei
- mittels einer Abweichung des Ist-Druckwerts von dem Referenzdruck auf eine Feuchtigkeit in dem Hohlraum (5) geschlossen wird.

Außerdem betrifft die Erfindung eine Messvorrichtung (1) zur Durchführung eines solchen Verfahrens.

## Beschreibung

Die Erfindung betrifft ein Messverfahren zur Messung einer Feuchtigkeit eines einen Schaum aufweisenden Hohlraums in einem wenigstens zwei Öffnungen aufweisenden Karosseriebauteil eines Kraftfahrzeugs sowie eine Messvorrichtung zur Durchführung eines solchen Verfahrens.

Während einer Kraftfahrzeugendmontage werden Kraftfahrzeuge einer Regenprobe unterzogen. Das Ziel der Regenprobe ist es, Undichtigkeiten des Kraftfahrzeugs aufzudecken und dabei die Kraftfahrzeuge nicht zu beschädigen. Dabei wird entweder eine Durchfahrt des Kraftfahrzeugs durch eine Bewässerungsanlage oder eine Beregnung des Kraftfahrzeugs mit vorbestimmten Parametern, insbesondere für einen vorbestimmten Zeitraum, mittels der Bewässerungsanlage durchgeführt. Anschließend wird das Kraftfahrzeug in Hinblick auf Feuchtigkeitseintritte in einen Innenraum des Kraftfahrzeugs, insbesondere in mit einem Akustikschaum gefüllte Hohlräume, untersucht. Nachteilig führen undichte Kraftfahrzeuge zu einem hohen Nacharbeitsaufwand. Zunächst sind die Wassereintritte zu analysieren, trocken zu legen und die Fehlerursache zu suchen. Dann erfolgen eine Nacharbeit und eine Nachprüfung, ob die Undichtigkeit behoben ist. Je nach Fehlerausprägung kann es zum Eindringen von höheren Wassermengen in die Kraftfahrzeuge kommen, was dann Interieurbauteile beschädigen kann.

Es ist bekannt, dass sogenannte Hohlraumschäume, auch als Akustikschäume bezeichnet, die in einem Hohlraum eines Karosseriebauteils eines Kraftfahrzeugs angeordnet sind, Wassereintritte zeitlich verzögern und so den Befund nach der Regenprobe erschweren.

Aus DE 10 2019 200 707 A1 ist bekannt, einen Kondensatorelement in einem Hohlraum anzuordnen und eine Feuchtigkeit mittels kapazitiver Messung zu bestimmen. Der Nachteil hierbei ist, dass das Kondensatorelement im Hohlraum angeordnet sein muss.

Aus DE 10 2021 001 764 A1 ist bekannt, einen Sensor in einem Hohlraum anzuordnen und eine Feuchtigkeit zu bestimmen. Auch hier besteht der Nachteil darin, dass der Sensor im Hohlraum angeordnet sein muss.

Aus DE 10 2016 008 472 A1 ist bekannt, die Feuchtigkeit eines Hohlraums örtlich lokal zu prüfen. Ist eine andere Stelle feucht, ist eine Detektion nur unzureichend möglich.

Die US-amerikanische Patentanmeldung US 2018/ 0216881 A1 offenbart ein Messverfahren zur Messung einer Feuchtigkeit eines Hohlraums (hier der Innenraum einer Vakuumkammer) in einem wenigstens zwei Öffnungen aufweisenden Bauteil, wobei in einer Prüf-Messabfolge:
- wenigstens eine erste in den Hohlraum des Bauteils hinreichende Öffnung (hier Anschlussöffnung der zum Druckmesselements führenden Leitung an Vakuumkammer) der wenigstens zwei Öffnungen mit wenigstens einem Druckmesselement
- wobei eine zweite in den Hohlraum des Bauteils hinreichende Öffnung (hier Anschlussöffnung für die Leitung) der wenigstens zwei Öffnungen mit einem Druckanschluss einer Druckbeaufschlagungsvorrichtung (hier Vakuumpumpe) druckleitend verbunden wird
- wobei die zweite Öffnung mittels des Druckanschlusses mit einem vorbestimmten Messdruck beaufschlagt wird
- wobei zumindest ein Ist-Druckwert an der ersten Öffnung mittels des wenigstens einen Druckmesselements nach einer ersten vorbestimmten Zeitdauer nach Messdruckbeaufschlagung erfasst wird
- wobei mittels einer Steuervorrichtung der zumindest eine Ist-Druckwert mit einem Referenzdruck verglichen wird (nach dem Prinzip der "backward difference" erfordert eine Differenzbildung oder einen Vergleich des jeweiligen Ist-Druckwerts mit dem unmittelbar zuvor gemessenen Referenz-Druckwert)
- wobei mittels der Steuervorrichtung mittels einer Abweichung des Ist-Druckwerts von dem Referenzdruck auf eine Feuchtigkeit in dem Hohlraum geschlossen wird.

Die deutsche Patentanmeldung DE 103 20 228 A1 offenbart einen Endoskopschaft mit einem Arbeitskanal und einer Anzahl von Versorgungs- und/oder Funktionskanälen. Dabei sind die Versorgungs- und/oder Funktionskanäle spiral, schlangen- und/oder Zickzack-förmig um den oder längs des Arbeitskanals angeordnet, wodurch eine Flexibilität bzw. Umbiegbarkeit des Endoskopschafts erreicht wird.

Der Erfindung liegt daher die Aufgabe zugrunde, ein Messverfahren zur Messung einer Feuchtigkeit eines einen Schaum aufweisenden Hohlraums in einem wenigstens zwei Öffnungen aufweisenden Karosseriebauteil eines Kraftfahrzeugs sowie eine Messvorrichtung zur Durchführung eines solchen Verfahrens zu schaffen, wobei die genannten Nachteile reduziert sind, vorzugsweise nicht auftreten.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten bevorzugten Ausführungsformen.

Die Aufgabe wird insbesondere gelöst, indem ein Messverfahren zur Messung einer Feuchtigkeit eines einen Schaum, insbesondere einen Hohlraumschaum und/oder einen Akustikschaum aufweisenden, insbesondere aufgrund einer Regenprobe feuchten Hohlraums in einem wenigstens zwei Öffnungen aufweisenden Karosseriebauteil eines Kraftfahrzeugs, geschaffen wird. In dem Messverfahren wird in einer Prüf-Messabfolge wenigstens eine erste in den Hohlraum des Karosseriebauteils des Kraftfahrzeugs hineinreichende Öffnung der wenigstens zwei Öffnungen mit wenigstens einem Druckmesselement druckleitend verbunden. Es wird eine zweite in den Hohlraum des Karosseriebauteils des Kraftfahrzeugs hineinreichende Öffnung der wenigstens zwei Öffnungen mit einem Druckanschluss einer Druckbeaufschlagungsvorrichtung druckleitend verbunden. Die zweite Öffnung wird mittels des Druckanschlusses mit einem vorbestimmten Messdruck beaufschlagt. Zumindest ein Ist-Druckwert wird an der ersten Öffnung mittels des wenigstens einen Druckmesselements nach einer ersten vorbestimmten Zeitdauer nach Messdruckbeaufschlagung erfasst. Der zumindest eine Ist-Druckwert wird mit einem Referenzdruck verglichen. Mittels einer Abweichung des Ist-Druckwerts von dem Referenzdruck wird auf eine Feuchtigkeit, insbesondere auf eine Feuchtigkeitsmenge, in dem Hohlraum, insbesondere auf eine Feuchtigkeit des Schaums, insbesondere des Hohlraumschaums und/oder des Akustikschaums, geschlossen.

Vorteilhaft kann in einem Hohlraum, insbesondere Karosseriehohlraum eines Kraftfahrzeugs, besonders einfach auf eine Feuchtigkeit geschlossen werden, die bisher nur zeitlich aufwändig oder mit bestimmten Messmitteln örtlich lokal zu detektieren war. Vorteilhaft kann auf Verfahrensschritte und/oder Messelemente in dem Hohlraum selbst verzichtet werden. Das Verfahren kann vorteilhaft mit geringem Aufwand und bei Verdacht auf Feuchtigkeit in dem Hohlraum durchgeführt werden.

Experimentelle Versuche haben insbesondere gezeigt, dass ein Ist-Druckwert in einem einen feuchten Schaum aufweisenden Hohlraum eines Karosseriebauteils eines Kraftfahrzeugs insbesondere bei dem Druckanschluss nach einer vorbestimmten Zeitdauer nach Messdruckbeaufschlagung größer ist, als bei einem einen trockenen Schaum aufweisenden Hohlraum eines baugleichen Karosseriebauteils eines Kraftfahrzeugs.

Mittels eines insbesondere trockenen Schaums eines Referenz-Bauteils kann zunächst ein Referenzdruck insbesondere bei dem Druckanschluss nach einer vorbestimmten Zeitdauer nach Messdruckbeaufschlagung erfasst werden. Wird ein baugleiches Bauteil, das einen feuchten Schaum aufweist, mit demselben Messdruck beaufschlagt, kann nach derselben vorbestimmten Zeitdauer insbesondere bei dem Druckanschluss ein Ist-Druckwert erfasst werden, der größer ist, als der Referenzdruck.

Somit kann insbesondere dann, wenn der Ist-Druckwert insbesondere bei dem Druckanschluss größer ist als der Referenzdruck, darauf geschlossen werden, dass der Schaum in dem Hohlraum eine größere Feuchtigkeit aufweist, als der Schaum in dem Hohlraum des trockenen Referenz- Karosseriebauteils des Kraftfahrzeugs.

Bevorzugt ist der absolute Messdruck größer als ein Umgebungsdruck, insbesondere größer als ein Druck von 1013 mbar bei einer Temperatur von 25 °C.

Gemäß einer Weiterbildung der Erfindung ist vorgesehen, dass als der mindestens eine Ist-Druckwert ein zeitlicher Ist-Druckverlauf erfasst wird. Der Ist-Druckverlauf wird mit einem zeitlichen Referenzdruckverlauf als dem Referenzdruck verglichen. Auf diese Weise kann besonders genau auf eine Feuchtigkeit in dem Hohlraum geschlossen werden.

Gemäß einer Weiterbildung der Erfindung ist vorgesehen, dass der Referenzdruck ermittelt wird, indem zeitlich vor der Prüf-Messabfolge eine erste Referenzmessabfolge an einem Referenz-Bauteil mit einem eine vorbestimmte Referenz-Feuchtigkeit aufweisenden Hohlraum, insbesondere Schaum, vorzugsweise an einem trockenen Referenz-Bauteil, insbesondere Schaum, durchgeführt wird. In der ersten Referenzmessabfolge wird wenigstens eine erste in einen Hohlraum des Referenz-Bauteils hineinreichende Öffnung von wenigstens zwei Öffnungen mit wenigstens einem Druckmesselement druckleitend verbunden. Eine zweite in den Hohlraum des Referenz-Bauteils hineinreichende Öffnung der wenigstens zwei Öffnungen wird mit einem Druckanschluss einer Druckbeaufschlagungsvorrichtung druckleitend verbunden. Die zweite Öffnung wird mittels des Druckanschlusses mit einem vorbestimmten Referenz-Messdruck beaufschlagt. Zumindest ein Ist-Druckwert wird nach der ersten vorbestimmten Zeitdauer nach Referenz-Messdruckbeaufschlagung an der ersten Öffnung mittels des wenigstens einen Druckmesselements als der Referenzdruck erfasst. Alternativ oder zusätzlich wird ein zeitlicher Ist-Druckverlauf an der ersten Öffnung mittels des wenigstens einen Druckmesselements als der Referenzdruckverlauf erfasst.

Gemäß einer Weiterbildung der Erfindung ist vorgesehen, dass dritte Öffnungen der wenigstens zwei Öffnungen für die Prüf-Messabfolge und/oder die Referenzmessabfolge druckdicht verschlossen werden. Auf diese Weise wird die Genauigkeit des Messverfahrens weiter erhöht.

Gemäß einer Weiterbildung der Erfindung ist vorgesehen, dass eine erste erste Öffnung und eine zweite erste Öffnung als die wenigstens eine erste Öffnung verwendet werden. Die erste erste Öffnung wird mit einem ersten Druckmesselement des wenigstens einen Druckmesselements druckleitend verbunden. Die zweite erste Öffnung wird mit einem zweiten Druckmesselement des wenigstens einen Druckmesselements druckleitend verbunden. Zumindest ein erster Ist-Druckwert wird an der ersten ersten Öffnung mittels des ersten Druckmesselements nach einer zweiten vorbestimmten Zeitdauer nach Messdruckbeaufschlagung erfasst. Zumindest ein zweiter Ist-Druckwert wird an der zweiten ersten Öffnung mittels des zweiten Druckmesselements nach der zweiten vorbestimmten Zeitdauer nach Messdruckbeaufschlagung erfasst. Eine Druckdifferenz zwischen dem ersten Ist-Druckwert und dem zweiten Ist-Druckwert wird mit einer Referenzdruckdifferenz verglichen. Mittels einer Abweichung der Druckdifferenz von der Referenzdruckdifferenz wird auf eine Feuchtigkeit, insbesondere auf eine Feuchtigkeitsmenge, in dem Hohlraum, insbesondere auf eine Feuchtigkeit des Schaums, insbesondere des Hohlraumschaums und/oder des Akustikschaums, geschlossen.

Gemäß einer Weiterbildung der Erfindung ist vorgesehen, dass als der mindestens eine erste Ist-Druckwert ein zeitlicher erster Ist-Druckverlauf erfasst wird. Als der mindestens eine zweite Ist-Druckwert wird ein zeitlicher zweiter Ist-Druckverlauf erfasst. Eine Druckverlaufsdifferenz zwischen dem ersten Ist-Druckverlauf und dem zweiten Ist-Druckverlauf wird mit einer Referenzdruckverlaufsdifferenz verglichen.

Gemäß einer Weiterbildung der Erfindung ist vorgesehen, dass die Referenzdruckdifferenz ermittelt wird, indem zeitlich vor der Prüf-Messabfolge eine zweite Referenzmessabfolge an einem Referenz-Bauteil mit einem eine vorbestimmte Referenz-Feuchtigkeit aufweisenden Hohlraum, insbesondere Schaum, vorzugsweise an einem trockenen Referenz-Bauteil, insbesondere Schaum, durchgeführt wird. In der zweiten Referenzmessabfolge werden eine erste erste Öffnung und eine zweite erste Öffnung als wenigstens eine erste Öffnung von wenigstens zwei in einen Hohlraum des Referenz-Bauteils hineinreichende Öffnungen des Referenz-Bauteils verwendet. Die erste erste Öffnung wird mit einem ersten Druckmesselement des wenigstens einen Druckmesselements druckleitend verbunden. Die zweite erste Öffnung wird mit einem zweiten Druckmesselement des wenigstens einen Druckmesselements druckleitend verbunden. Die zweite Öffnung wird mittels des Druckanschlusses mit einem vorbestimmten Referenz-Messdruck beaufschlagt. Zumindest ein erster Ist-Druckwert wird an der ersten ersten Öffnung mittels des ersten Druckmesselements nach der zweiten vorbestimmten Zeitdauer nach Referenz-Messdruckbeaufschlagung erfasst, wobei zumindest ein zweiter Ist-Druckwert nach der zweiten vorbestimmten Zeitdauer nach Referenz-Messdruckbeaufschlagung an der zweiten ersten Öffnung mittels des zweiten Druckmesselements erfasst wird, wobei eine Druckdifferenz zwischen dem ersten Ist-Druckwert und dem zweiten Ist-Druckwert als die Referenzdruckdifferenz bestimmt wird. Alternativ oder zusätzlich wird ein zeitlicher Ist-Druckverlauf an der ersten ersten Öffnung mittels des ersten Druckmesselements nach Referenz-Messdruckbeaufschlagung erfasst, wobei ein zeitlicher zweiter Ist-Druckverlauf an der zweiten ersten Öffnung mittels des zweiten Druckmesselements erfasst wird, wobei eine Druckdifferenz zwischen dem ersten Ist-Druckwert und dem zweiten Ist-Druckwert als die Referenzdruckverlaufsdifferenz bestimmt wird.

Die Aufgabe wird auch gelöst, indem eine Messvorrichtung zur Messung einer Feuchtigkeit eines einen Schaum, insbesondere einen Hohlraumschaum und/oder einen Akustikschaum aufweisenden, insbesondere aufgrund einer Regenprobe feuchten Hohlraums in einem wenigstens zwei Öffnungen aufweisenden Karosseriebauteil eines Kraftfahrzeugs, insbesondere zur Durchführung eines erfindungsgemäßen Messverfahrens oder eines Messverfahrens nach einer oder mehreren der zuvor beschriebenen Ausführungsformen, geschaffen wird. Die Messvorrichtung weist eine Druckbeaufschlagungsvorrichtung, wenigstens ein Druckmesselement und eine Steuervorrichtung auf. Das wenigstens eine Druckmesselement ist eingerichtet, um druckleitend mit wenigstens einer ersten Öffnung der wenigstens zwei in den Hohlraum des Karosseriebauteils des Kraftfahrzeugs hineinreichenden Öffnungen verbunden zu werden und um nach einer ersten vorbestimmten Zeitdauer nach Messdruckbeaufschlagung zumindest einen Ist-Druckwert zu erfassen. Die Druckbeaufschlagungsvorrichtung ist eingerichtet, um mittels eines Druckanschlusses mit einer zweiten Öffnung der wenigstens zwei in den Hohlraum des Karosseriebauteils des Kraftfahrzeugs hineinreichende Öffnungen druckleitend verbunden zu werden und um die zweite Öffnung mittels des Druckanschlusses mit einem vorbestimmten Messdruck zu beaufschlagen. Die Steuervorrichtung ist insbesondere mit der Druckbeaufschlagungsvorrichtung und dem wenigstens einen Druckmesselement wirkverbunden und eingerichtet, um den nach der ersten vorbestimmten Zeitdauer nach Messdruckbeaufschlagung erfassten Ist-Druckwert mit einem Referenzdruck zu vergleichen und um mittels einer Abweichung des Ist-Druckwerts von dem Referenzdruck auf eine Feuchtigkeit, insbesondere Feuchtigkeitsmenge, in dem Hohlraum, insbesondere auf eine Feuchtigkeit des Schaums, insbesondere des Hohlraumschaums und/oder des Akustikschaums, zu schließen. In Zusammenhang mit der Messvorrichtung ergeben sich insbesondere die Vorteile, die bereits in Zusammenhang mit dem Messverfahren erläutert wurden.

Gemäß einer Weiterbildung der Erfindung ist vorgesehen, dass die Messvorrichtung ein erstes Druckmesselement und ein zweites Druckmesselement als das wenigstens eine Druckmesselement aufweist. Das erste Druckmesselement ist eingerichtet, um druckleitend mit einer ersten ersten Öffnung der wenigstens einen ersten Öffnung verbunden zu werden und um an der ersten ersten Öffnung nach einer zweiten vorbestimmten Zeitdauer nach Messdruckbeaufschlagung einen ersten Ist-Druckwert zu erfassen. Das zweite Druckmesselement ist eingerichtet, um druckleitend mit einer zweiten ersten Öffnung der wenigstens einen ersten Öffnung verbunden zu werden und um an der zweiten ersten Öffnung nach der zweiten vorbestimmten Zeitdauer nach Messdruckbeaufschlagung einen zweiten Ist-Druckwert zu erfassen. Die Steuervorrichtung ist mit dem ersten Druckmesselement und dem zweiten Druckmesselement wirkverbunden und eingerichtet, um eine Druckdifferenz zwischen dem nach der zweiten vorbestimmten Zeitdauer nach Messdruckbeaufschlagung erfassten ersten Ist-Druckwert und dem nach der zweiten vorbestimmten Zeitdauer nach Messdruckbeaufschlagung erfassten zweiten Ist-Druckwert mit einer Referenzdruckdifferenz zu vergleichen und um mittels einer Abweichung der Druckdifferenz von der Referenzdruckdifferenz auf eine Feuchtigkeit, insbesondere Feuchtigkeitsmenge, in dem Hohlraum, insbesondere auf eine Feuchtigkeit des Schaums, insbesondere des Hohlraumschaums und/oder des Akustikschaum, zu schließen. Gemäß einer Weiterbildung der Erfindung ist vorgesehen, dass die Steuervorrichtung eingerichtet ist, um als den mindestens einen ersten Ist-Druckwert einen zeitlichen ersten Ist-Druckverlauf zu erfassen, um als den mindestens einen zweiten Ist-Druckwert einen zeitlichen zweiten Ist-Druckverlauf zu erfassen, und um eine Druckverlaufsdifferenz zwischen dem ersten Ist-Druckverlauf und dem zweiten Ist-Druckverlauf mit einer Referenzdruckverlaufsdifferenz zu vergleichen.

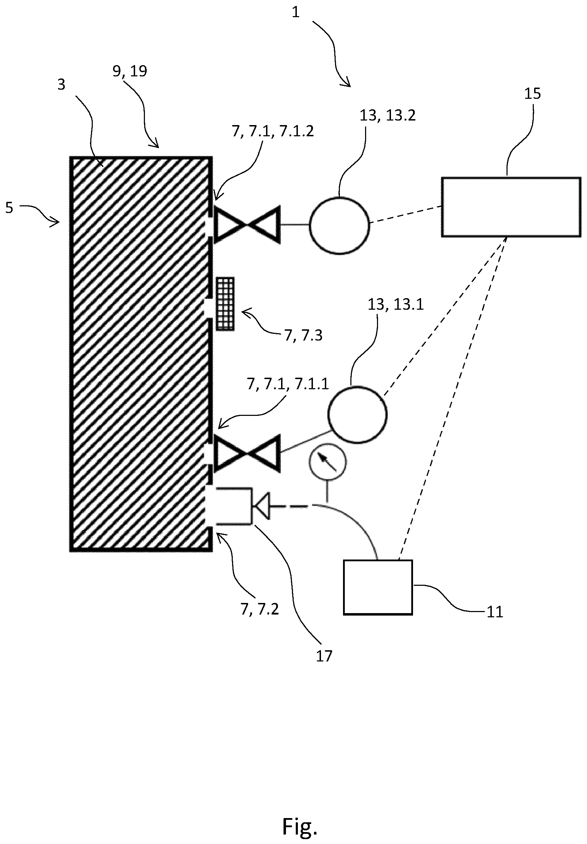

Die Erfindung wird im Folgenden anhand der Zeichnung näher erläutert. Dabei zeigt die einzige
- Figur: eine schematische Darstellung eines Ausführungsbeispiels einer Messvorrichtung zur Messung einer Feuchtigkeit eines einen Schaum aufweisenden Hohlraums.

Die Figur zeigt eine Messvorrichtung 1 zur Messung einer Feuchtigkeit eines einen Schaum 3, bevorzugt einen Hohlraumschaum und/oder einen Akustikschaum aufweisenden, bevorzugt aufgrund einer Regenprobe feuchten Hohlraums 5 in einem wenigstens zwei Öffnungen 7 - hier vier Öffnungen 7 - aufweisenden Karosseriebauteil eines hier nicht dargestellten Kraftfahrzeugs.

Die Messvorrichtung 1 weist eine Druckbeaufschlagungsvorrichtung 11, wenigstens ein Druckmesselement 13 - hier zwei Druckmesselemente 13.1, 13.2 - und eine Steuervorrichtung 15 auf.

Das wenigstens eine Druckmesselement 13 ist eingerichtet, um druckleitend mit wenigstens einer ersten Öffnung 7.1 der wenigstens zwei in den Hohlraum 5 des Karosseriebauteils des Kraftfahrzeugs 9 hineinreichenden Öffnungen 7 verbunden zu werden und um nach einer ersten vorbestimmten Zeitdauer nach Messdruckbeaufschlagung zumindest einen Ist-Druckwert zu erfassen.

Die Druckbeaufschlagungsvorrichtung 11 ist eingerichtet, um mittels eines Druckanschlusses 17 mit einer zweiten Öffnung 7.2 der wenigstens zwei in den Hohlraum 5 des Karosseriebauteils des Kraftfahrzeugs 9 hineinreichende Öffnungen 7 druckleitend verbunden zu werden und um die zweite Öffnung 7.2 mittels des Druckanschlusses 17 mit einem vorbestimmten Messdruck zu beaufschlagen.

Die Steuervorrichtung 15 ist mit dem wenigstens einen Druckmesselement 13 wirkverbunden und eingerichtet, um den nach der ersten vorbestimmten Zeitdauer nach Messdruckbeaufschlagung erfassten Ist-Druckwert mit einem Referenzdruck zu vergleichen und um mittels einer Abweichung des Ist-Druckwerts von dem Referenzdruck auf eine Feuchtigkeit, bevorzugt Feuchtigkeitsmenge, in dem Hohlraum 5, bevorzugt auf eine Feuchtigkeit des Schaums 3, bevorzugt des Hohlraumschaums und/oder des Akustikschaums, zu schließen.

Bevorzugt ist vorgesehen, dass die Messvorrichtung 1 ein erstes Druckmesselement 13.1 und ein zweites Druckmesselement 13.2 als das wenigstens eine Druckmesselement 13 aufweist. Das erste Druckmesselement 13.1 ist eingerichtet, um druckleitend mit einer ersten ersten Öffnung 7.1.1 der wenigstens einen ersten Öffnung 7.1 verbunden zu werden und um an der ersten ersten Öffnung 7.1.1 nach einer zweiten vorbestimmten Zeitdauer nach Messdruckbeaufschlagung einen ersten Ist-Druckwert zu erfassen. Das zweite Druckmesselement 13.2 ist eingerichtet, um druckleitend mit einer zweiten ersten Öffnung 7.1.2 der wenigstens einen ersten Öffnung 7.1 verbunden zu werden und an der zweiten ersten Öffnung 7.1.2 nach der zweiten vorbestimmten Zeitdauer nach Messdruckbeaufschlagung einen zweiten Ist-Druckwert zu erfassen. Die Steuervorrichtung 15 ist mit dem ersten Druckmesselement 13.1 und dem zweiten Druckmesselement 13.2 wirkverbunden und eingerichtet, um eine Druckdifferenz zwischen dem nach der zweiten vorbestimmten Zeitdauer nach Messdruckbeaufschlagung erfassten ersten Ist-Druckwert und dem nach der zweiten vorbestimmten Zeitdauer nach Messdruckbeaufschlagung erfassten zweiten Ist-Druckwert mit einer Referenzdruckdifferenz zu vergleichen und um mittels einer Abweichung der Druckdifferenz von der Referenzdruckdifferenz auf eine Feuchtigkeit, bevorzugt Feuchtigkeitsmenge, in dem Hohlraum 5, bevorzugt auf eine Feuchtigkeit des Schaums 3, bevorzugt des Hohlraumschaums und/oder des Akustikschaums, zu schließen.

Bevorzugt ist vorgesehen, dass die Steuervorrichtung 15 eingerichtet ist, um als den mindestens einen ersten Ist-Druckwert einen zeitlichen ersten Ist-Druckverlauf zu erfassen, um als den mindestens einen zweiten Ist-Druckwert einen zeitlichen zweiten Ist-Druckverlauf zu erfassen, und um eine Druckverlaufsdifferenz zwischen dem ersten Ist-Druckverlauf und dem zweiten Ist-Druckverlauf mit einer Referenzdruckverlaufsdifferenz zu vergleichen.

Bevorzugt ist vorgesehen, dass dritte Öffnungen 7.3 der wenigstens zwei Öffnungen 7 druckdicht verschlossen sind.

Bevorzugt ist die Messvorrichtung 1 eingerichtet zur Durchführung eines erfindungsgemäßen Messverfahrens. Bevorzugt wird zur Ermittlung des Referenzdrucks, der Referenzdruckdifferenz und/oder der Referenzdruckverlaufsdifferenz ein bevorzugt trockenes Karosseriebauteil eines Kraftfahrzeugs 9 als Referenz-Bauteil 19 verwendet.

## Patentansprüche

1. Messverfahren zur Messung einer Feuchtigkeit eines einen Schaum (3) aufweisenden Hohlraums (5) in einem wenigstens zwei Öffnungen (7) aufweisenden Karosseriebauteils eines Kraftfahrzeugs (9), wobei in einer Prüf-Messabfolge
- wenigstens eine erste in den Hohlraum (5) des Karosseriebauteils des Kraftfahrzeugs (9) hineinreichende Öffnung (7.1) der wenigstens zwei Öffnungen (7) mit wenigstens einem Druckmesselement (13) druckleitend verbunden wird, wobei
- eine zweite in den Hohlraum (5) des Karosseriebauteils des Kraftfahrzeugs (9) hineinreichende Öffnung (7.2) der wenigstens zwei Öffnungen (7) mit einem Druckanschluss (17) einer Druckbeaufschlagungsvorrichtung (11) druckleitend verbunden wird, wobei
- die zweite Öffnung (7.2) mittels des Druckanschlusses (17) mit einem vorbestimmten Messdruck beaufschlagt wird, wobei
- zumindest ein Ist-Druckwert an der ersten Öffnung (7.1) mittels des wenigstens einen Druckmesselements (13) nach einer ersten vorbestimmten Zeitdauer nach Messdruckbeaufschlagung erfasst wird, wobei
- der zumindest eine Ist-Druckwert mit einem Referenzdruck verglichen wird, wobei
- mittels einer Abweichung des Ist-Druckwerts von dem Referenzdruck auf eine Feuchtigkeit in dem Hohlraum (5) geschlossen wird.

2. Messverfahren nach Anspruch 1, wobei
- als der mindestens eine Ist-Druckwert ein zeitlicher Ist-Druckverlauf erfasst wird, wobei
- der Ist-Druckverlauf mit einem zeitlichen Referenzdruckverlauf als dem Referenzdruck verglichen wird.

3. Messverfahren nach einem der vorhergehenden Ansprüche, wobei
- der Referenzdruck ermittelt wird, indem zeitlich vor der Prüf-Messabfolge eine erste Referenzmessabfolge an einem Referenz-Bauteil (19) mit einem eine vorbestimmte Referenz-Feuchtigkeit aufweisenden Hohlraum (5), vorzugsweise an einem trockenen Referenz-Bauteil (19), durchgeführt wird, wobei
- in der ersten Referenzmessabfolge wenigstens eine erste in einen Hohlraum (5) des Referenz-Bauteils (19) hineinreichende Öffnung (7.1) von wenigstens zwei Öffnungen (7) mit wenigstens einem Druckmesselement (13) druckleitend verbunden wird, wobei
- eine zweite in den Hohlraum (5) des Referenz-Bauteils (19) hineinreichende Öffnung (7.2) der wenigstens zwei Öffnungen (7) mit einem Druckanschluss (17) einer Druckbeaufschlagungsvorrichtung (11) druckleitend verbunden wird, wobei
- die zweite Öffnung (7.2) mittels des Druckanschlusses (17) mit einem vorbestimmten Referenz-Messdruck beaufschlagt wird, wobei
- zumindest ein Ist-Druckwert nach der ersten vorbestimmten Zeitdauer nach Referenz-Messdruckbeaufschlagung an der ersten Öffnung (7.1) mittels des wenigstens einen Druckmesselements (13) als der Referenzdruck erfasst wird, und/oder
- ein zeitlicher Ist-Druckverlauf an der ersten Öffnung (7.1) mittels des wenigstens einen Druckmesselements als der Referenzdruckverlauf erfasst wird.

4. Messverfahren nach einem der vorhergehenden Ansprüche, wobei
- dritte Öffnungen (7.3) der wenigstens zwei Öffnungen (7) für die Prüf-Messabfolge und/oder die Referenzmessabfolge druckdicht verschlossen werden.

5. Messverfahren nach einem der vorhergehenden Ansprüche, wobei
- eine erste erste Öffnung (7.1.1) und eine zweite erste Öffnung (7.1.2) als die wenigstens eine erste Öffnung (7.1) verwendet werden, wobei
- die erste erste Öffnung (7.1.1) mit einem ersten Druckmesselement (13.1) des wenigstens einen Druckmesselements (13) druckleitend verbunden wird, wobei
- die zweite erste Öffnung (7.1.2) mit einem zweiten Druckmesselement (13.2) des wenigstens einen Druckmesselements (13) druckleitend verbunden wird, wobei
- zumindest ein erster Ist-Druckwert an der ersten ersten Öffnung (7.1.1) mittels des ersten Druckmesselements (13.1) nach einer zweiten vorbestimmten Zeitdauer nach Messdruckbeaufschlagung erfasst wird, wobei
- zumindest ein zweiter Ist-Druckwert an der zweiten ersten Öffnung (7.1.2) mittels des zweiten Druckmesselements (13.2) nach der zweiten vorbestimmten Zeitdauer nach Messdruckbeaufschlagung erfasst wird, wobei
- eine Druckdifferenz zwischen dem ersten Ist-Druckwert und dem zweiten Ist-Druckwert mit einer Referenzdruckdifferenz verglichen wird, wobei
- mittels einer Abweichung der Druckdifferenz von der Referenzdruckdifferenz auf eine Feuchtigkeit in dem Hohlraum (5) geschlossen wird.

6. Messverfahren nach Anspruch 5, wobei
- als der mindestens eine erste Ist-Druckwert ein zeitlicher erster Ist-Druckverlauf erfasst wird, wobei
- als der mindestens eine zweite Ist-Druckwert ein zeitlicher zweiter Ist-Druckverlauf erfasst wird, wobei
- eine Druckverlaufsdifferenz zwischen dem ersten Ist-Druckverlauf und dem zweiten Ist-Druckverlauf mit einer Referenzdruckverlaufsdifferenz verglichen wird.

7. Messverfahren nach Anspruch 5 oder 6, wobei
- die Referenzdruckdifferenz ermittelt wird, indem zeitlich vor der Prüf-Messabfolge eine zweite Referenzmessabfolge an einem Referenz-Bauteil (19) mit einem eine vorbestimmte Referenz-Feuchtigkeit aufweisenden Hohlraum (5), vorzugsweise an einem trockenen Referenz-Bauteil (19), durchgeführt wird, wobei
- in der zweiten Referenzmessabfolge eine erste erste Öffnung (7.1.1) und eine zweite erste Öffnung (7.1.2) als wenigstens eine erste Öffnung (7.1) von wenigstens zwei in einen Hohlraum (5) des Referenz-Bauteils (19) hineinreichende Öffnungen (7) des Referenz-Bauteils (19) verwendet werden, wobei
- die erste erste Öffnung (7.1.1) mit einem ersten Druckmessselement (13.1) des wenigstens einen Druckmesselements (13) druckleitend verbunden wird, wobei
- die zweite erste Öffnung (7.1.2) mit einem zweiten Druckmesselement (13.2) des wenigstens einen Druckmesselements (13) druckleitend verbunden wird, wobei
- die zweite Öffnung (7.2) mittels des Druckanschlusses (17) mit einem vorbestimmten Referenz-Messdruck beaufschlagt wird, wobei
- zumindest ein erster Ist-Druckwert an der ersten ersten Öffnung (7.1.1) mittels des ersten Druckmesselements (13.1) nach der zweiten vorbestimmten Zeitdauer nach Referenz-Messdruckbeaufschlagung erfasst wird, wobei zumindest ein zweiter Ist-Druckwert an der zweiten ersten Öffnung (7.1.2) mittels des zweiten Druckmesselements (13.2) nach der zweiten vorbestimmten Zeitdauer nach Referenz-Messdruckbeaufschlagung erfasst wird, wobei eine Druckdifferenz zwischen dem ersten Ist-Druckwert und dem zweiten Ist-Druckwert als die Referenzdruckdifferenz bestimmt wird, und/oder
- ein zeitlicher Ist-Druckverlauf an der ersten ersten Öffnung (7.1.1) mittels des ersten Druckmesselements (13.1) erfasst wird, wobei ein zeitlicher zweiter Ist-Druckverlauf an der zweiten ersten Öffnung (7.1.2) mittels des zweiten Druckmesselements (13.2) erfasst wird, wobei eine Druckdifferenz zwischen dem ersten Ist-Druckwert und dem zweiten Ist-Druckwert als die Referenzdruckverlaufsdifferenz bestimmt wird.

8. Messvorrichtung (1) zur Messung einer Feuchtigkeit eines einen Schaum (3) aufweisenden Hohlraums (5) in einem wenigstens zwei Öffnungen (7) aufweisenden Karosseriebauteil eines Kraftfahrzeugs (9), insbesondere zur Durchführung eines Messverfahrens nach einem der vorhergehenden Ansprüche, aufweisend eine Druckbeaufschlagungsvorrichtung (11), wenigstens ein Druckmesselement (13), und eine Steuervorrichtung (15) wobei,
- das wenigstens eine Druckmesselement (13) eingerichtet ist, um druckleitend mit wenigstens einer ersten Öffnung (7.1) der wenigstens zwei in den Hohlraum (5) des Karosseriebauteils des Kraftfahrzeugs (9) hineinreichenden Öffnungen (7) verbunden zu werden und um nach einer ersten vorbestimmten Zeitdauer nach Messdruckbeaufschlagung zumindest einen Ist-Druckwert zu erfassen, wobei
- die Druckbeaufschlagungsvorrichtung (11) eingerichtet ist, um mittels eines Druckanschlusses (17) mit einer zweiten Öffnung (7.2) der wenigstens zwei in den Hohlraum (5) des Karosseriebauteils des Kraftfahrzeugs (9) hineinreichende Öffnungen (7) druckleitend verbunden zu werden und um die zweite Öffnung (7.2) mittels des Druckanschlusses (17) mit einem vorbestimmten Messdruck zu beaufschlagen, und wobei
- die Steuervorrichtung (15) mit dem wenigstens einen Druckmesselement (13) wirkverbunden und eingerichtet ist, um den nach der ersten vorbestimmten Zeitdauer nach Messdruckbeaufschlagung erfassten Ist-Druckwert mit einem Referenzdruck zu vergleichen und um mittels einer Abweichung des Ist-Druckwerts von dem Referenzdruck auf eine Feuchtigkeit in dem Hohlraum (5) zu schließen.

9. Messvorrichtung (1) nach Anspruch 8, aufweisend ein erstes Druckmesselement (13.1) und ein zweites Druckmesselement (13.2) als das wenigstens eine Druckmesselement (13), wobei
- das erste Druckmesselement (13.1) eingerichtet ist, um druckleitend mit einer ersten ersten Öffnung (7.1.1) der wenigstens einen ersten Öffnung (7.1) verbunden zu werden und um an der ersten ersten Öffnung (7.1.1) nach einer zweiten vorbestimmten Zeitdauer nach Messdruckbeaufschlagung einen ersten Ist-Druckwert zu erfassen, wobei
- das zweite Druckmesselement (13.2) eingerichtet ist, um druckleitend mit einer zweiten ersten Öffnung (7.1.2) der wenigstens einen ersten Öffnung (7.1) verbunden zu werden und um an der zweiten ersten Öffnung (7.1.2) nach der zweiten vorbestimmten Zeitdauer nach Messdruckbeaufschlagung einen zweiten Ist-Druckwert zu erfassen, wobei
- die Steuervorrichtung (15) mit dem ersten Druckmesselement (13.1) und dem zweiten Druckmesselement (13.2) wirkverbunden und eingerichtet ist, um eine Druckdifferenz zwischen dem nach der zweiten vorbestimmten Zeitdauer nach Messdruckbeaufschlagung erfassten ersten Ist-Druckwert und dem nach der zweiten vorbestimmten Zeitdauer nach Messdruckbeaufschlagung erfassten zweiten Ist-Druckwert mit einer Referenzdruckdifferenz zu vergleichen und um mittels einer Abweichung der Druckdifferenz von der Referenzdruckdifferenz auf eine Feuchtigkeit in dem Hohlraum (5) zu schließen.

10. Messvorrichtung (1) nach Anspruch 9, wobei die Steuervorrichtung (15) eingerichtet ist, um
- als den mindestens einen ersten Ist-Druckwert einen zeitlichen ersten Ist-Druckverlauf zu erfassen, um
- als den mindestens einen zweiten Ist-Druckwert einen zeitlichen zweiten Ist-Druckverlauf zu erfassen, und um
eine Druckverlaufsdifferenz zwischen dem ersten Ist-Druckverlauf und dem zweiten Ist-Druckverlauf mit einer Referenzdruckverlaufsdifferenz zu vergleichen
